(19) Europäisches Patentamt / European Patent Office / Office européen des brevets

(11) **EP 1 807 345 B1**

(12) **EUROPEAN PATENT SPECIFICATION**

(45) Date of publication and mention of the grant of the patent:
**08.06.2011 Bulletin 2011/23**

(21) Application number: **05802229.4**

(22) Date of filing: **10.10.2005**

(51) Int Cl.:
***C01B 31/02*** *(2006.01)* ***C01B 3/26*** *(2006.01)*
***B01J 23/83*** *(2006.01)*

(86) International application number:
**PCT/IT2005/000587**

(87) International publication number:
**WO 2006/040788 (20.04.2006 Gazette 2006/16)**

(54) **SIMULTANEOUS PRODUCTION OF CARBON NANOTUBES AND MOLECULAR HYDROGEN**

GLEICHZEITIGE HERSTELLUNG VON KOHLENSTOFF-NANORÖHREN UND MOLEKULAREM WASSERSTOFF

PRODUCTION SIMULTANEE DE NANOTUBES DE CARBONE ET D'HYDROGENE MOLECULAIRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.10.2004 IT RM20040502**

(43) Date of publication of application:
**18.07.2007 Bulletin 2007/29**

(73) Proprietor: **Universita'Degli Studi di Roma "La Sapienza"**
**00185 Roma (IT)**

(72) Inventors:
- **GOZZI, Daniele**
  **I-00152 Roma (IT)**
- **LATINI, Alessandro**
  **I-00135 Roma (IT)**

(74) Representative: **Sarpi, Maurizio et al**
**Studio Ferrario S.r.l.**
**Via Collina, 36**
**00187 Roma (IT)**

(56) References cited:
**US-A1- 2004 005 269**

- **GAO X P ET AL: "Synthesis of carbon nanotubes by catalytic decomposition of methane using LaNi5 hydrogen storage alloy as a catalyst" CHEMICAL PHYSICS LETTERS ELSEVIER NETHERLANDS, vol. 327, no. 5-6, 15 September 2000 (2000-09-15), pages 271-276, XP002361169 ISSN: 0009-2614**
- **GAVILLET J ET AL: "NUCLEATION AND GROWTH OF SINGLE-WALLED NANOTUBES: THE ROLE OF METALLIC CATALYSTS" JOURNAL OF NANOSCIENCE AND NANOTECHNOLOGY, AMERICAN SCIENTIFIC PUBLISHERS, US, vol. 4, no. 4, April 2004 (2004-04), pages 346-359, XP008052111 ISSN: 1533-4880**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 807 345 B1

Printed by Jouve, 75001 PARIS (FR)

## Description

The present invention relates to a process of thermal decomposition of methane in the presence of a catalyst directed to provide pure molecular hydrogen and carbon in the integral allotropic species of nanotubes according to the following heterogeneous reaction

$$CH_4(g) = C(nano) + 2H_2(g).$$

The catalyst identified, synthesized and characterized by the inventors consists of powder of the intermetallic compound with formula $NdNi_5$.

Said catalyst causes:

a) carbon to nucleate and to grow not in the species graphite and/or amorphous carbon but in the species nanotube. This prevents the catalyst from being poisoned quickly in spite of what usually is the case;
b) a nanostructured state not to be requested for the catalyst but only a powdered state which is not necessarily supported and whose granulometry is not crucial;
c) the temperature of the reaction to be just above the temperature to which the reaction is thermodynamically favoured;
d) the yield of the reaction to be constant in time;
e) the nanotubes to be easily separated and purified from the residues of catalyst.

It is known, from GAO X P ET AL, a method for growing carbon nanotubes by catalytic decomposition of methane by using LaNi5 as catalytic particles. The reaction temperature used is of 670˚C and the catalytic particles are treated before being used for the methane decomposition reaction with a KOH solution which transforms them in metallic Ni over a surface layer of La2O3. The metallic Ni is the one which is considered as responsible for catalysing the growth of the carbon nanotubes.

It is also known, from US2004/005269, a method for growing carbon nanostructures by chemical vapour deposition in which a catalyst comprising at least one element from the group Fe, Co, Ni and at least one lanthanide is used. In the examples filed in this patent, indeed, the catalysts used are in the oxide form and their stoichiometry is not defined. It is further known, from GAVILLET J ET AL, a study concerning the role of the catalyst in the nucleation and growth of single-walled carbon nanotubes when using a catalyst made of Ni and Y, Ce or La.

FIELD OF THE INVENTION

The increasing interest for the hydrogen as future energy vector promotes searches all over the links of the production chain: production, purification, storage, distribution and utilization in internal-combustion engines and fuel cells. It is known that even though the potential availability of hydrogen is practically infinite, $H_2$ molecule is not available and must be produced. Chemical industry has identified for a long time processes able to produce molecular hydrogen industrially (steam-reforming of methane, partial oxidation of methane, water gas, etc.) but such processes do not show the necessary requirements for a production of molecular hydrogen with high purity unless next purification stages. In particular, the steam-reforming process by which 95% world hydrogen is produced, however, has the problem of producing a corresponding amount of carbon dioxide esteemed in 47,500 millions ton/year. The process of the invention does not produce either carbon dioxide or carbon monoxide.

It should be noted that the supply of the fuel cells requires:

- a content of CO lower than 30 ppm;
- ecologic compatibility;
- criteria of energy saving.

The decomposition of methane according to the present invention largely satisfies the above requirements as the only gas product of the reaction is molecular hydrogen and the only solid product is carbon with the high added value that the carbon nanotubes are materials of considerable technological interest.

The invention will be better understood from the following detailed description with reference to the accompanying drawings that show by way of a not limiting example a preferred embodiment thereof. In the drawings:

Fig. 1A shows the values of free energy $\Delta_d G$ of methane decomposition as a function of the absolute temperature in a flow reactor supplied with pure methane at its input and producing hydrogen at its output;

Fig. 1B shows the values of free energy $\Delta_d G$ of methane decomposition as a function of the absolute temperature in a flow reactor supplied with a mixture of 50% methane at its input;

Fig. 2 shows the device used for laboratory tests according to the present invention;

Fig. 3A shows the concentrations of $H_2$ and $CH_4$ as left ordinate ($CH_4$) and opposite ordinate ($H_2$) in a test at 2 bar (absolute), a temperature of 500°C, and a flow of pure methane of 5 $cm^3 min^{-1}$ STP;

Fig. 3B shows the proportion of conversion of methane into hydrogen;

Fig. 4 is a SEM picture of the nanotubes provided by the process according to the invention;

Fig. 5 shows the cross longitudinal section of some nanotubes obtained by TEM microscopy;

Fig. 6 shows in detail the multiwalled structure of a nanotube;

Fig. 7 shows a nanotube sample with nanoparticle of catalyst viewed by TEM;

Fig. 8 shows the results of the X-ray diffraction analysis of the intermetallic compound obtained by mixing powders of Ni and Nd and next fusion under hard vacuum by electron gun.

According to the invention disclosed, the thermal methane decomposition process directed to provide molecular hydrogen and carbon in the integral species of nanotubes develops in the presence of a catalyst consisting of powder of an intermetallic compound with formula $NdNi_5$.

In the literature there is a number of works about this intermetallic compound regarding above all its electronic structure and magnetic properties. The use of this intermetallic compound as catalyst is mentioned only in the hydrodesulphurisation and hydrogenation reactions ("Characteristics of intermetallic NdNi5 as an unsupported catalyst in thiophene hydrodesulphurisation." Moon, Young-Hwan; Ihm, Son-Ki, Catalysis Letters (1996), 42(1,2), 73-80), therefore for purposes which are quite different from those of the present patent application.

Thermodynamic of the reaction

The thermodynamic of the methane decomposition reaction occurring in a flow reactor supplied with methane at its input and producing hydrogen at its output with an excess of methane, if any, is given by the equation:

$$\Delta_d G = \Delta_d G^\theta + RT\ln(p_t / p^\theta) + RT\ln\frac{4}{(1+\gamma)(x_{CH_4}^{in}\gamma - 1)}; \quad \gamma = \frac{J_{in}}{J_{H_2}}$$

where $\Delta_d G^\theta$, $p_t$, $p^\theta$ and $x_{CH_4}^{in}$ are the standard free energy of the reaction, the total pressure, the standard pressure, and the molar fraction of input methane, respectively, when the latter is mixed with an inert gas. In case of pure methane, $x_{CH_4}^{in} = 1$. The flows are identified by J.

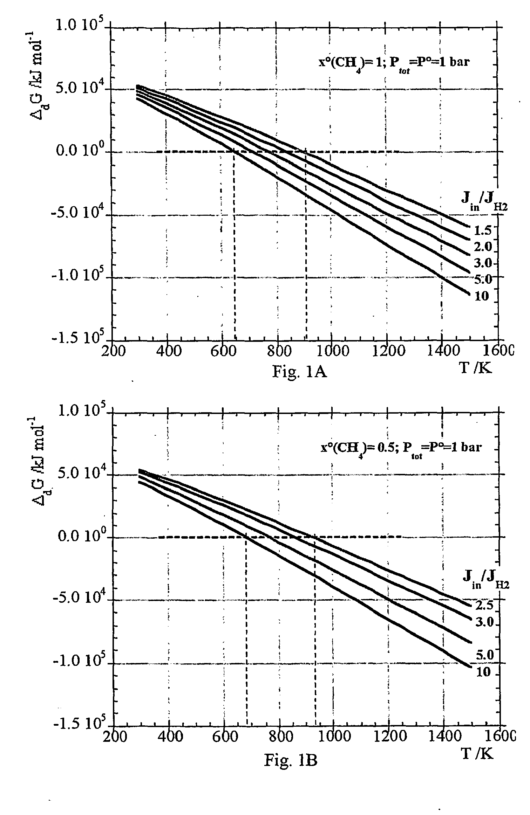

Figures 1A and 1B show the values of free energy of methane decomposition, $\Delta_d G$, as a function of the absolute temperature according to the preceding equation, assuming different values of $\gamma$.

In particular, figure 1A relates to the situation where the reactor is supplied with pure methane, while in figure 1B the reactor is supplied with a mixture of 50% methane.

In both figures the horizontal dashed line shows the balance condition. The values under such line show situations where the thermodynamic of the decomposition reaction is helped. In addition, it should be appreciated that as a function of the ratio $J_{in}/J_{H_2}$, i.e. mixture flow to hydrogen flow, the minimum reaction temperature increases as such ratio decreases. Under the same $J_{in}/J_{H_2}$, the minimum temperature decreases as $x_{CH_4}^{in}$ increases. For example, if $J_{in}/J_{H_2}$ = 5.0, the minimum temperature is 718 K at $x_{CH_4}^{in} = 1$ while the minimum temperature increase to 767 K at

$x_{CH_4}^{in} = 0.5$. The temperature range between the two vertical dashed lines shows the range of minimum temperatures in which the decomposition reaction can take place under a given ratio $J_{in}/J_{H2}$.

Testing

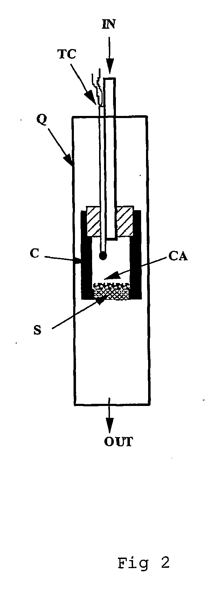

The testing has been conducted in laboratory by using a little cylindrical container C shown in fig. 2. It is made of ceramics or stainless steel with a capacity of some cubic centimetres and is placed vertically inside a quartz tube Q contained in turn within a little vertical oven (fig. 2). In the lower portion of container C there is a porous partition S on which a catalyst powder layer CA is deposited consisting of the intermetallic compound with formula $NdNi_5$ with a granulometry between 1 and 50 $\mu$m. The temperature is controlled by the thermocouple TC.

The output gas phase is analysed by quadrupole mass spectrometer. Carbon produced in the form of nanotube grows on the catalyst as the methane decomposition reaction advances.

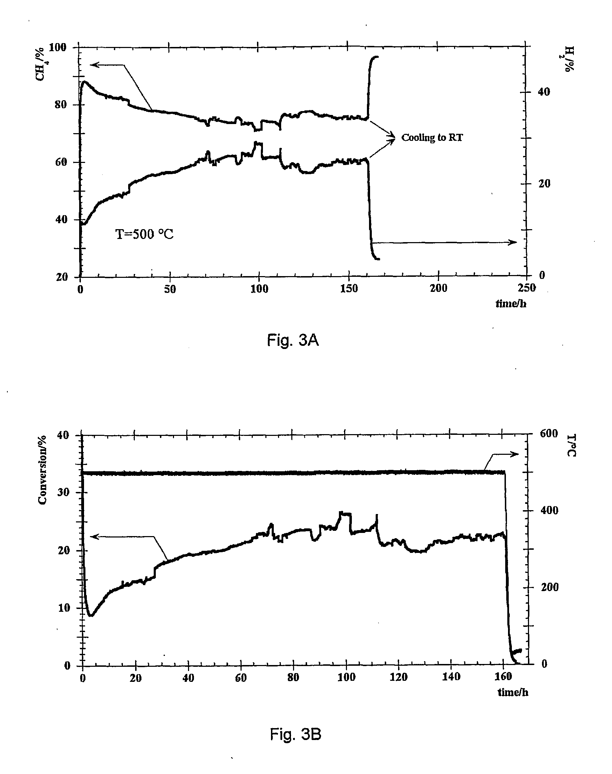

Figure 3A shows the concentrations of $H_2$ and $CH_4$ as left ordinate ($CH_4$) and the opposite ordinate ($H_2$) in a test conducted at 2 bar (absolute), a temperature of 500°C and a flow of pure methane of 5 $cm^3 min^{-1}$ STP.

The testing is initially conducted by passing argon into the reactor, argon being totally or partially replaced by methane as the temperature reaches the set value.

Figure 3B shows the conversion proportion, $\alpha$, of methane into hydrogen calculated according to the expression:

$$\alpha = \left(\frac{C_{in} - C_{out}}{C_{in}}\right) x100$$

where *C* is the methane concentration and in and out relate to methane entering and coming out of the reactor, respectively.

It has been experimentally shown that the optimum temperature of the reaction is between 500 and 550°C. Carbon is produced quantitatively in the allotropic shape of nanotube and has the structure of a multiwalled wall.

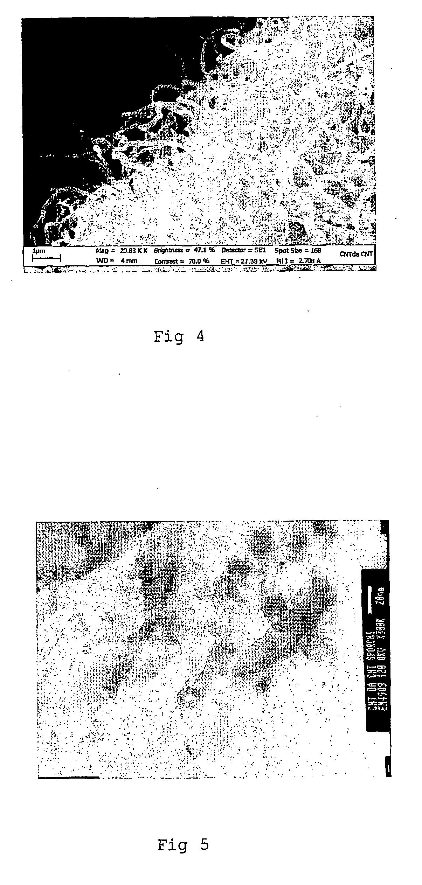

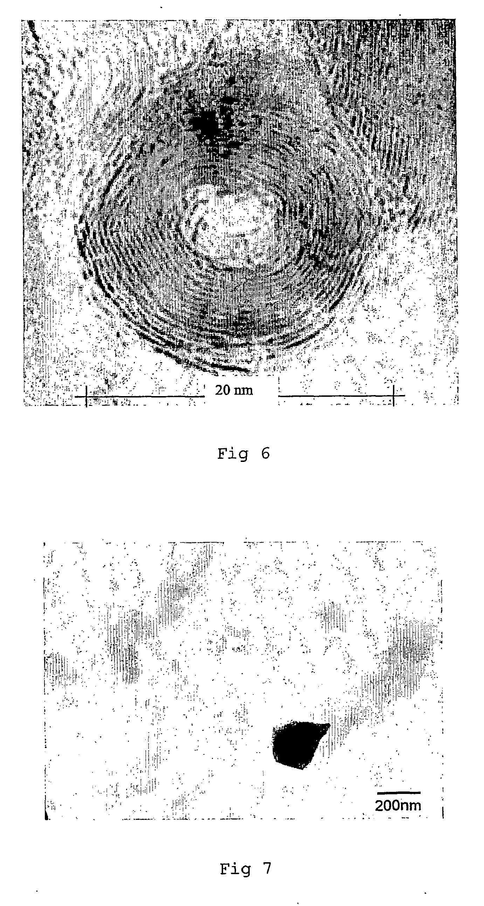

Figure 4 shows a SEM picture of the nanotubes produced while figure 5 shows the cross longitudinal section of some nanotubes obtained by TEM microscopy. The multiwalled structure is defined in detail in figure 6.

Preparation of the catalyst

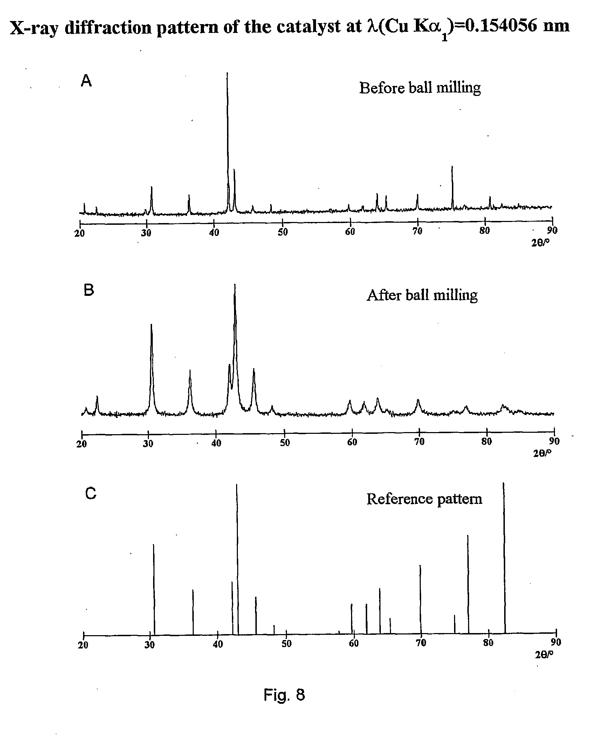

As mentioned above many times, the catalyst consists of intermetallic compound powders with formula $NdNi_5$. It has been prepared as follows: powder of Ni (Aldrich, ~100 mesh, purity 99.99%) and powder of Nd (Aldrich, ~40 mesh, purity 99%) were mixed intimately in a mortar of agate with the addition of some millilitre of inert solvent (e.g. ethyl ether); the resulting mixture was pressed into a tablet and melt several times by the electron gun under high vacuum ($5x10^{-5}$ mbar). After each melting the tablet was overturned. The container of the melted mixture was composed of inert refractory material (specifically a composite $BN/TiB_2$). The resulting ingot was initially ground coarsely in a steel mortar and a portion of the powder was subjected to X-ray diffraction analysis (fig. 8) to check whether the reaction had finished. Once checked the absence of the initial reactive means in the product, the powder was reduced to a black fine dust by grinding it overnight in a planetary mill with steel balls. The obtained black dust was subjected to further diffractometer analysis that revealed a considerable widening of the diffraction peaks due to a reduction in the size of the grains (fig. 8). The black dust was then subjected to BET analysis by nitrogen adsorption that showed a surface area of 0.683 $\pm$ 0.007 $m^2/g$, and SEM analysis that showed particles with size between about 1 and 7 $\mu$m.

The present invention has been described according to a preferred embodiment thereof, however, it is self-evident that anyone skilled in the art can make a number of modifications and variations without departing from the scope as defined in the appended claims.

## Claims

1. A process of thermal decomposition of methane **characterized in that** a catalyst consisting of an intermetallic compound with formula $NdNi_5$ is used.

2. The process of thermal decomposition of methane according to claim 1, **characterized in that** the decomposition takes place according to the heterogeneous reaction

$$CH_4(g) = C(nano) + 2H_2(g)$$

with integral, simultaneous production of carbon nanotubes and pure molecular hydrogen.

**3.** The process according to claim 1, **characterized in that** the catalyst is used under the form of powder with granulometry between 1 and 50 μm.

**4.** The process according to any precedin claim, **characterized in that** the catalyst is used under the form of powder with granulometry between 1 and 7 μm.

**5.** The process according to any preceding claim, **characterized in that** the temperature of the reaction is between 500 and 550°C.

**6.** The process according to any preceding claim, **characterized in that** carbon is produced under the integral allotropic form of multiwalled carbon nanotube.

**7.** The process according to any preceding claim, **characterized in that** gas methane is passed onto the catalyst at a temperature such as to provide a conversion into multiwalled carbon nanotubes and pure molecular hydrogen which is constant in time.

**8.** Use of the intermetallic compound with formula $NdNi_5$ as catalyst for the reaction of thermal methane decomposition.

**9.** Use of the intermetallic compound with formula $NdNi_5$ as catalyst according to claim 8, **characterized in that** the thermal methane decomposition is carried out according to the heterogeneous reaction:

$CH_4(g) = C(nano) + 2H_2(g)$ where the carbon obtained is produced in the integral allotropic form of multiwalled nanotube.

**10.** Use of the intermetallic compound with formula $NdNi_5$ according to claim 8 or 9, **characterized in that** said catalyst can be used under the form of powder with granulometry between 1 and 50 μm.

**11.** Use of the intermetallic compound with formula $NdNi_5$ according to claim 8 or 9 or 11, **characterized in that** said catalyst can be used under the form of powder with granulometry between 1 and 7 μm.

**Patentansprüche**

**1.** Verfahren zum thermischen Abbau von Methan, **dadurch gekennzeichnet, dass** ein Katalysator verwendet wird, der aus einer intermetallischen Verbindung mit Formel $NdNi_5$ besteht.

**2.** Verfahren zum thermischen Abbau von Methan nach Anspruch 1, **dadurch gekennzeichnet, dass** der Abbau nach der heterogenen Reaktion

$$CH_4 (g) = C(nano) + 2H_2 (g)$$

mit integrierter, gleichzeitiger Bildung von Kohlenstoff-Nanoröhrchen und reinem molekularen Wasserstoff abläuft.

**3.** Verfahren nach Anspruch 1, **dadurch gekennzeichnet, dass** der Katalysator unter der Form von Pulver mit einer Teilchengrößenanalyse zwischen 1 und 50 μm verwendet wird.

**4.** Verfahren nach einem vorhergehenden Anspruch, **dadurch gekennzeichnet, dass** der Katalysator unter der Form von Pulver mit einer Teilchengrößenanalyse zwischen 1 und 7 μm verwendet wird.

**5.** Verfahren nach einem vorhergehenden Anspruch, **dadurch gekennzeichnet, dass** die Temperatur der Reaktion zwischen 500 und 550° liegt.

**6.** Verfahren nach einem vorhergehenden Anspruch, **dadurch gekennzeichnet, dass** Kohlenstoff unter der vollständigen allotropen Modifikation eines mehrwandigen Kohlenstoff-Nanoröhrchens gebildet wird.

7. Verfahren nach einem vorhergehenden Anspruch, **dadurch gekennzeichnet, dass** Methangas auf den Katalysator bei einer Temperatur geführt wird, um eine Umwandlung zu mehrwandigen Kohlenstoff-Nanoröhrchen und reinem molekularen Wasserstoff zu bewirken, die zeitlich konstant ist.

8. Verwendung der intermetallischen Verbindung mit Formel $NdNi_5$ als Katalysator für die Reaktion des thermischen Methanabbaus.

9. Verwendung der intermetallischen Verbindung mit Formel $NdNi_5$ als Katalysator nach Anspruch 8, **dadurch gekennzeichnet, dass** der thermische Methanabbau nach der heterogenen Reaktion:

$$CH_4(g) = C(nano) + 2H_2(g)$$

abläuft, bei der der erhaltene Kohlenstoff in der vollständigen allotropen Modifikation eines mehrwandigen Nanoröhrchens gebildet wird.

10. Verwendung der intermetallischen Verbindung mit Formel $NdNi_5$ nach Anspruch 8 oder 9, **dadurch gekennzeichnet, dass** der Katalysator unter der Form von Pulver mit einer Teilchengrößenanalyse zwischen 1 und 50 μm verwendet werden kann.

11. Verwendung der intermetallischen Verbindung mit Formel $NdNi_5$ nach Anspruch 8 oder 9 oder 10, **dadurch gekennzeichnet, dass** der Katalysator unter der Form von Pulver mit einer Teilchengrößenanalyse zwischen 1 und 7 μm verwendet werden kann.

## Revendications

1. Procédé de décomposition thermique du méthane **caractérisé en ce qu'**un catalyseur constitué d'un composé intermétallique de formule $NdNi_5$ est utilisé.

2. Procédé de décomposition thermique du méthane selon la revendication 1, **caractérisé en ce que** la décomposition a lieu conformément à la réaction hétérogène

$$CH_4(g) = C(nano) + 2H_2(g)$$

avec production intégrale, simultanée de nanotubes de carbone et d'hydrogène moléculaire pur.

3. Procédé selon la revendication 1, **caractérisé en ce que** le catalyseur est utilisé sous la forme de poudre ayant une granulométrie entre 1 et 50 μm.

4. Procédé selon l'une quelconque des revendications précédentes, **caractérisé en ce que** le catalyseur est utilisé sous la forme de poudre ayant une granulométrie entre 1 et 7 μm.

5. Procédé selon l'une quelconque des revendications précédentes, **caractérisé en ce que** la température de la réaction est comprise entre 500 et 550°C.

6. Procédé selon l'une quelconque des revendications précédentes, **caractérisé en ce que** le carbone est produit sous la forme allotropique intégrale de nanotube de carbone multiparois.

7. Procédé selon l'une quelconque des revendications précédentes, **caractérisé en ce que** le méthane gazeux est passé sur le catalyseur à une température telle qu'elle permet une conversion en nanotubes de carbone multiparois et hydrogène moléculaire pur qui est constante dans le temps.

8. Utilisation du composé intermétallique de formule $NdNi_5$ en tant que catalyseur pour la réaction de décomposition thermique du méthane.

9. Utilisation du composé intermétallique de formule $NdNi_5$ en tant que catalyseur selon la revendication 8, **caractérisée**

**en ce que** la décomposition thermique du méthane est réalisée conformément à la réaction hétérogène:

$$CH_4(g) = C(nano) + 2H_2(g)$$

où le carbone obtenu est produit dans la forme allotropique intégrale de nanotube multiparois.

**10.** Utilisation du composé intermétallique de formule $NdNi_5$ selon la revendication 8 ou 9, **caractérisée en ce que** ledit catalyseur peut être utilisé sous la forme de poudre ayant une granulométrie entre 1 et 50 μm.

**11.** Utilisation du composé intermétallique de formule $NdNi_5$ selon la revendication 8 ou 9 ou 10, **caractérisée en ce que** ledit catalyseur peut être utilisé sous la forme de poudre ayant une granulométrie entre 1 et 7 μm.

$x^o(CH_4)$= 1; $P_{tot}$=P°=1 bar
$\Delta_d G$ /kJ mol$^{-1}$
1.0 10$^5$
5.0 10$^4$
0.0 10$^0$
-5.0 10$^4$
-1.0 10$^5$
-1.5 10$^5$
$J_{in}/J_{H2}$
1.5
2.0
3.0
5.0
10
200
400
600
800
1000
1200
1400
1600
T /K

Fig. 1A


$x^o(CH_4)$= 0.5; $P_{tot}$=P°=1 bar
$\Delta_d G$ /kJ mol$^{-1}$
1.0 10$^5$
5.0 10$^4$
0.0 10$^0$
-5.0 10$^4$
-1.0 10$^5$
-1.5 10$^5$
$J_{in}/J_{H2}$
2.5
3.0
5.0
10
200
400
600
800
1000
1200
1400
1600
T /K

Fig. 1B

IN
TC
Q
C
CA
S
OUT

Fig 2

$CH_4$/%
$H_2$/%
100
80
60
40
20
40
20
0
Cooling to RT
T=500 °C
0
50
100
150
200
250
time/h

Fig. 3A

Conversion/%
T/°C
40
30
20
10
0
600
400
200
0
0
20
40
60
80
100
120
140
160
time/h


Fig. 3B

1µm
Mag = 20.83 K X
WD = 4 mm
Brightness = 47.1 %
Contrast = 70.0 %
Detector = SE1
EHT = 27.38 kV
Spot Size = 168
Fil I = 2.708 A
CNTda CNT

Fig 4

Fig 5

20 nm

Fig 6

200nm

Fig 7

X-ray diffraction pattern of the catalyst at λ(Cu Kα1)=0.154056 nm
A
Before ball milling
20
30
40
50
60
70
80
90
2θ/°
B
After ball milling
20
30
40
50
60
70
80
90
2θ/°
C
Reference pattern
20
30
40
50
60
70
80
90
2θ/°

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004005269 A


### Non-patent literature cited in the description


- **Moon, Young-Hwan ; Ihm, Son-Ki.** Characteristics of intermetallic NdNi5 as an unsupported catalyst in thiophene hydrodesulphurisation. *Catalysis Letters,* 1996, vol. 42 (1,2), 73-80